# EUROPEAN PATENT APPLICATION

(11) **EP 4 265 315 A1**
(43) Date of publication of application: **25.10.2023**
(21) Application number: 21906341.9
(22) Date of filing: 01.12.2021
(51) Int. Cl.: B01D 39/20, C04B 38/00, C04B 38/06, F01N 3/022, F01N 3/035

(54) **FINE PARTICLE FILTER, METHOD FOR REMOVING PARTICULATE MATERIAL FROM EXHAUST GAS OF INTERNAL COMBUSTION ENGINE, AND METHOD FOR PRODUCING FINE PARTICLE FILTER**

(30) Priority: 16.12.2020 JP 2020208396
(71) Applicant: Umicore Shokubai Japan Co., Ltd., Tokoname-shi Aichi 479-0882 (JP)
(72) Inventor: KAWASHIMA, Shota, Kobe-shi, Hyogo 650-0047 (JP); SANO, Yuki, Kobe-shi, Hyogo 650-0047 (JP); ENOSAKA, Takuya, Kobe-shi, Hyogo 650-0047 (JP)
(74) Representative: Banse & Steglich Patentanwälte PartmbB
(86) International application number: PCT/JP2021/044073
(87) International publication number: WO 2022/130978

(57) **Abstract**

A fine particle filter for removing a particulate matter from exhaust gas of an internal combustion engine includes a wall-flow type filter that has a porous wall, and a ceramic layer that is made of ceramic particles and that is applied in a flow channel of the wall-flow type filter, wherein the ceramic layer has a porosity of 20% or more and 41% or less. The ceramic particles may be formed of one selected from the group consisting of alumina, silica, zirconia, ceria, titania, and zeolite.

## Description

### Technical Field

The present disclosure relates to a fine particle filter for removing a particulate matter from exhaust gas of an internal combustion engine, a method for removing particulate matter from exhaust gas of an internal combustion engine, and a method for producing a fine particle filter.

### Background Art

Exhaust gas discharged from internal combustion engines such as diesel engines or gasoline engines contains large amounts of particulate matter such as soot. Such particulate matter is also called particulate matter (PM). In order to prevent environmental pollution with PM, it is required to remove PM from exhaust gas at a high level.

It is known to use wall-flow type filters (hereinafter sometimes abbreviated as WF) as a main element for removing PM from exhaust gas. The WF has a plurality of gas flow channels partitioned by a porous wall. The WF is configured such that exhaust gas flowing into a gas flow channel of the WF passes through the porous wall and is discharged from another gas flow channel. When exhaust gas passes through the porous wall, PM contained in the exhaust gas is collected in the filter. As a result, PM is removed from the exhaust gas and the exhaust gas is purified.

However, when purifying the exhaust gas with the WF, PM may penetrate into the porous wall and clog the pores of the porous material. When the pores are clogged, the problem arises that the pressure loss (pressure drop) of the filter increases. It is known that in order to solve such a problem, ceramic particles are deposited on the surface of the porous wall of the WF to prevent PM from penetrating into the pores (PTL 1).

### Citation List

### Patent Literature

PTL 1: JP2011-224514A

### Summary of Invention

### Technical Problem

A conventional WF having a layer of ceramic particles on the surface of a porous wall did not have sufficient PM filtration efficiency. Therefore, an object of the present disclosure is to provide a WF with improved filtration efficiency. Another object of the present disclosure is to provide a method for removing PM from exhaust gas of an internal combustion engine using the WF. Yet another object of the present disclosure is to provide a method for producing the WF.

### Solution to Problem

The present inventor repeated intensive studies to solve the above problem. As a result, it was found that the performance of a filter is improved by adjusting the porosity of a layer made of ceramic particles within a specified range. In view of such a finding, the present application adopts the following aspects to solve the above problem.
(1) A fine particle filter for removing PM from exhaust gas of an internal combustion engine according to a first aspect includes a WF that has a porous wall, and a ceramic layer that is made of ceramic particles and that it is applied in a flow channel of the WF, and that the ceramic layer has a porosity of 20% or more and 41% or less.
(2) In the fine particle filter according to the above aspect, the ceramic particles may be formed of one selected from the group consisting of alumina, silica, zirconia, ceria, titania, and zeolite.
(3) In the fine particle filter according to the above aspect, the ceramic particles may have an average particle diameter (d50) of 1.5 um or more and less than 5 um.
(4) In the fine particle filter according to the above aspect, the ceramic layer may be supported in an amount of 10 g/L or more and 50 g/L or less with respect to the volume of the WF.
(5) The fine particle filter according to the above aspect may have an exhaust gas purification catalyst between the WF and the ceramic layer.
(6) A method for removing PM from the exhaust gas of an internal combustion engine according to a second aspect includes a step of allowing the exhaust gas of the internal combustion engine to pass through the fine particle filter according to the above aspect.
(7) A method for producing a fine particle filter according to a third aspect includes a step of preparing an aerosol by mixing ceramic particles and air, a step of allowing the aerosol to pass through the inside of a flow channel of a WF having a porous wall; a step of supplying water in an amount of 30 g/L or more and 300 g/L or less with respect to the volume of the WF to the ceramic particles and the WF, and a step of drying the WF.
(8) In the method for producing a fine particle filter according to the above aspect, the aerosol may have a density of 0.001 g/m³ or more and 1 g/m³ or less.
(9) In the method for producing a fine particle filter according to the above aspect, the step of supplying water may include a step of allowing a gas containing moisture to pass through the WF.
(10) The method for producing a fine particle filter according to the above aspect may include a step of washcoating an exhaust gas purification catalyst in a flow channel of the WF before the step of allowing aerosol to pass through the inside of the flow channel of the WF.

### Advantageous Effects of Invention

The fine particle filter according to the present disclosure has improved PM filtration efficiency.

Further, the method for producing a fine particle filter according to the present disclosure can remove PM from exhaust gas with high efficiency.

Further, the method for producing a fine particle filter according to the present disclosure can provide a fine particle filter having improved PM filtration efficiency.

### Brief Description of Figures

[FIG. 1] FIG. 1 is a schematic perspective view of a fine particle filter according to the present embodiment.
[FIG. 2A] FIG. 2A is a schematic cross-sectional view of a fine particle filter according to the present embodiment.
[FIG. 2B] FIG. 2B is a schematic cross-sectional view of a fine particle filter in which a ceramic layer has a low porosity.
[FIG. 2C] FIG. 2C is a schematic cross-sectional view of a fine particle filter in which a ceramic layer has a high porosity.
[FIG. 2D] FIG. 2D is a schematic cross-sectional view of a fine particle filter having an in-wall coating.
[FIG. 2E] FIG. 2E is a schematic cross-sectional view of a fine particle filter having an on-wall coating.
[FIG. 3] FIG. 3 is a scanning electron microscope image (SEM image) of a cross section of a fine particle filter.
[FIG. 4] FIG. 4 is an SEM image of a cross section of a fine particle filter.
[FIG. 5] FIG. 5 is a graph obtained by plotting filtration efficiency against porosity.

### Description of Embodiments

Hereinafter, embodiments of the present application will be described in detail with reference to the figures where appropriate. In the figures used in the following description, the characteristic parts may be enlarged for convenience in order to make the features of the invention easier to understand, and the dimensional ratio of each component may be different from the actual one. The materials, dimensions, etc. exemplified in the following description are examples, and the invention is not limited thereto, and can be implemented to the extent that the gist thereof is not changed.

### [Fine Particle Filter]

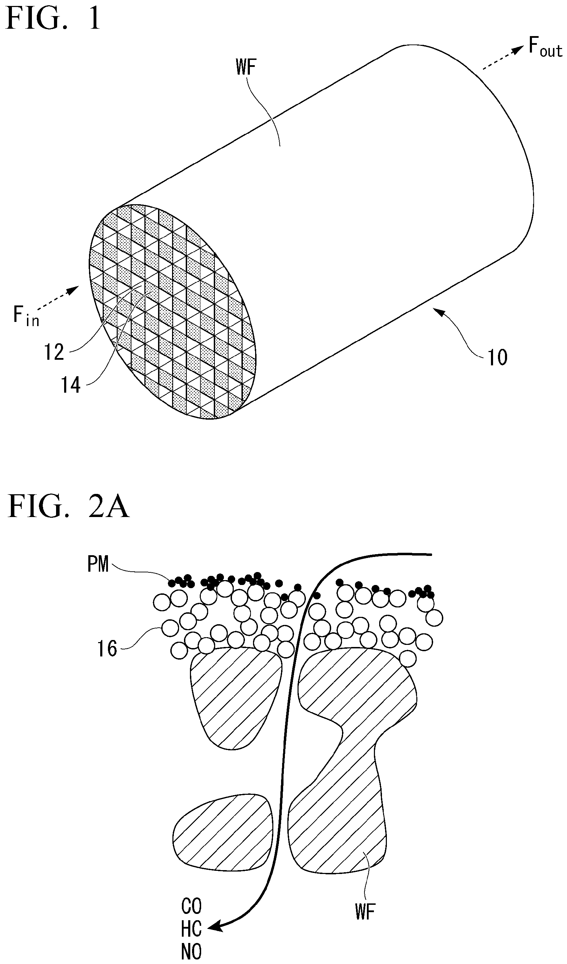

FIG. 1 is a schematic perspective view of a fine particle filter 10 for removing PM from the exhaust gas of an internal combustion engine according to the present embodiment. FIG. 1 shows that the exhaust gas is introduced into the fine particle filter 10 according to the dashed arrow of Fᵢₙ, and that exhaust gas is discharged according to the dashed arrow of Fₒᵤₜ. The fine particle filter 10 includes a wall-flow type filter (WF) having a porous wall. The WF has a plurality of flow channels extending adjacent to each other. The plurality of flow channels may be parallel to each other. The plurality of flow channels are arranged such that flow channels having an opening portion 12 on the exhaust gas inlet side and flow channels having a sealing portion 14 on the exhaust gas inlet side alternate with each other.

The flow channel of the WF is sealed on the exhaust gas outlet side when having the opening portion 12 on the exhaust gas inlet side, and is open on the exhaust gas outlet side in the case of having the sealing portion 14 on the exhaust gas inlet side. Therefore, the exhaust gas introduced into the fine particle filter 10 from the opening portion 12 is discharged from the adjacent flow channel through the porous wall of the WF.

FIG. 2A is a schematic cross-sectional view of the fine particle filter 10 according to the present embodiment. The fine particle filter 10 according to the present embodiment includes a ceramic layer 16 consisting of ceramic particles and is applied in the flow channels of the WF. That is, the WF also functions as a carrier for the ceramic layer 16. In FIG. 2A, PM derived from exhaust, gas collected by the fine particle filter 10 is depicted.

### [Wall-Flow Type Filter (WF)]

The WF may be the same as that used for a general exhaust gas purification filter. The total length of the WF 10 is not particularly limited, and is preferably 10 mm or more and 1000 mm or less, more preferably 50 mm or more and 300 mm or less, and even more preferably 80 mm or more and 150 mm or less. Here, the total length of the WF 10 is the length from the exhaust gas inlet side to the exhaust gas outlet side of the WF 10. The WF may have a honeycomb-like structure. Preferably, the WF is a gasoline particulate filter (GPF).

The number of opening portions 12 and sealing portions 14 of the WF can be set within an appropriate range in consideration of the type of exhaust gas to be treated, gas flow rate, pressure loss, removal efficiency, or the like. For example, the WF can be sufficiently used when the cell density (number of cells/unit cross-sectional area) is 100 cells/square inch or more and 1200 cells/square inch or less, and the cell density is preferably 150 cells/square inch or more and 900 cells/square inch or less and more preferably 200 cells/square inch or more and 700 cells/square inch or less. The shape of a gas flow channels(cell shape) of the WF is not limited, and can be, for example, a hexagonal shape, a quadrangular shape, a triangular shape, a corrugated shape, or the like.

In the WF, a gas can flow to another flow channel through fine holes present in the wall surface of the flow channel, and exhaust gas introduced from the opening portion 12 passes through another flow channel and comes out of the WF. The WF can filter out PM contained in exhaust gas.

The flow channels of the WF are separated from the adjacent flow channels by a porous wall. A porous wall can be used as long as the thickness thereof is 1 mil (0.0254 mm) or more and 100 mils (2.54 mm) or less, and the thickness is preferably 5 mils (0.127 mm) or more and 30 mils (0.762 mm) or less.

The pore diameter of the porous walls of the WF can be set within an appropriate range in consideration of the type of exhaust gas to be treated, gas flow rate, pressure loss, removal efficiency, or the like. For example, the porous walls of the WF can be used as long as the pore diameter (d50) is between 0.1 um or more and 30 um, and the pore diameter is preferably 10 um or more and 25 um or less, and particularly preferably 15 um or more and 20 um or less. Here, in the present specification, the pore diameter (d50) of the porous walls means a pore diameter representing 50% of the total pore volume determined by mercury intrusion porosimetry.

The material of the WF may be the same as that used for a general exhaust gas purification filter. For example, the WF may be made of a metal or a ceramic, and is preferably formed of cordierite, stainless steel, silicon carbide (SiC), mullite, alumina (α-alumina), or silica, and more preferably formed of cordierite, stainless steel, or SiC. When the WF is formed of cordierite, stainless steel, or SiC, the durability of the fine particle filter 10 is particularly improved.

### [Ceramic Layer]

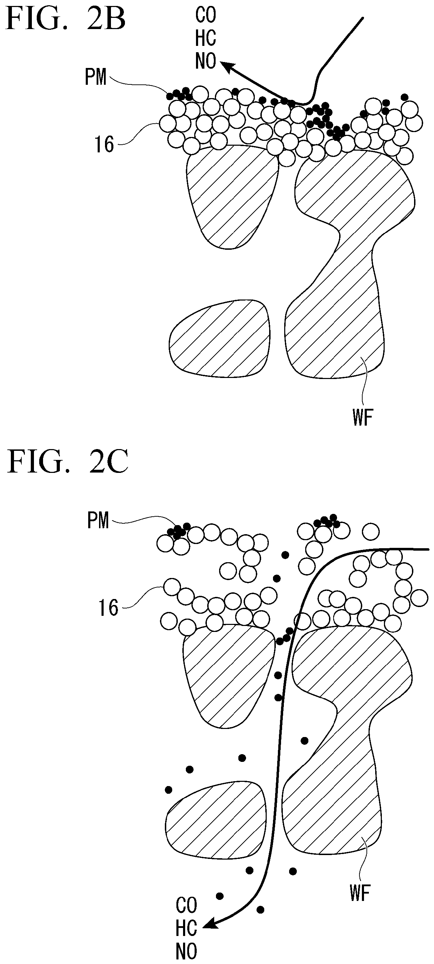

The ceramic layer 16 is made of ceramic particles, and the porosity of the ceramic layer 16 is 20% or more and 41% or less. The porosity of the ceramic layer 16 is preferably 25% or more and 40% or less, more preferably 30% or more and 39% or less, and even more preferably 32% or more and 39% or less. When the porosity of the ceramic layer 16 is less than 20%, PM can be effectively collected by the ceramic layer as shown in FIG. 2B, but exhaust gas does not easily flow through the ceramic layer 16, which is not preferable. Further, when the porosity of the ceramic layer 16 is more than 41%, as shown in FIG. 2C, the amount of PM that passes through the ceramic layer 16 is large, and the filtration efficiency decreases, which is not preferable. That is, when the porosity of the ceramic layer 16 is within the range of the invention, PM filtration by the ceramic layer 16 and circulation of exhaust gas in the ceramic layer 16 occur effectively. As a result, the PM filtration efficiency is high and also the exhaust gas purification performance is high. The ceramic layer 16 need only be able to collect PM, and the ceramic layer 16 need not contain an exhaust gas purification catalyst which purifies exhaust gas.

The porosity of the ceramic layer 16 can be determined via image processing. That is, first, the cross section of the ceramic layer 16 is photographed with a scanning electron microscope (SEM). Subsequently, for example, by performing a binarization process on the captured SEM image, the ceramic particle regions and the void region are separated in the photographed ceramic layer 16. Subsequently, the area of the ceramic particle regions and the area of the void region is calculated via image processing. By dividing the area of the void region by the sum of the area of the ceramic particle regions and the area of the void region, the porosity of the ceramic layer 16 in the range captured in the SEM image can be determined. The porosity of the ceramic layer 16 is calculated for any five points, and the average value thereof may be used as the porosity of the ceramic layer 16.

With a conventional production method, the ceramic layer 16 with a porosity in the above range could not be achieved in an inexpensive manner. That is, the porosity becomes small when using a method of applying a slurry and drying, and the porosity becomes large when simply spraying an aerosol. On the other hand, by producing the ceramic layer 16 using the method according to the present disclosure, the ceramic layer 16 having a preferred porosity can be manufactured.

The material of the ceramic particles is not particularly limited. For example, the ceramic particles may be formed from a material which is stable even at a high temperature of about 500°C, and is preferably made of one selected from the group consisting of alumina, silica, zirconia, ceria, titania, and zeolite. Since alumina has high heat resistance, is stable, and has low reactivity, it is particularly preferable that the ceramic particles are made of alumina.

The average particle diameter (d50) of the ceramic particles is preferably 1.5 um or more and less than 5 um, more preferably 2 um or more and 4.5 um or less, and even more preferably 2.4 um or more and 4 um or less. When the average particle diameter (d50) of the ceramic particles is 1.5 um or more, it is difficult for the ceramic particles to enter into the pores of the porous wall and it can be prevented that the pores of the WF become smaller. Further, when the average particle diameter (d50) of the ceramic particles is less than 5 um, the ceramic particles and the ceramic layer 16 strongly adhere to the WF, and peeling can be prevented. Here, in the present specification, the average particle diameter (d50) of the ceramic particles means a volume-based 50% particle diameter (median diameter) measured by laser diffractometry.

The ceramic layer 16 is preferably applied in an amount of 10 g/L or more and 50 g/L or less with respect to the volume of the WF. When the applied amount of the ceramic layer 16 is within the above range, it is possible to achieve both a high PM filtration efficiency and high exhaust gas purification performance due to high gas permeability. The ceramic layer 16 is more preferably applied in an amount of 15 g/L or more and 40 g/L or less with respect to the volume of the WF, and is even more preferably applied in an amount of 20 g/L or more and 30 g/L or less.

### [Exhaust Gas Purification Catalyst]

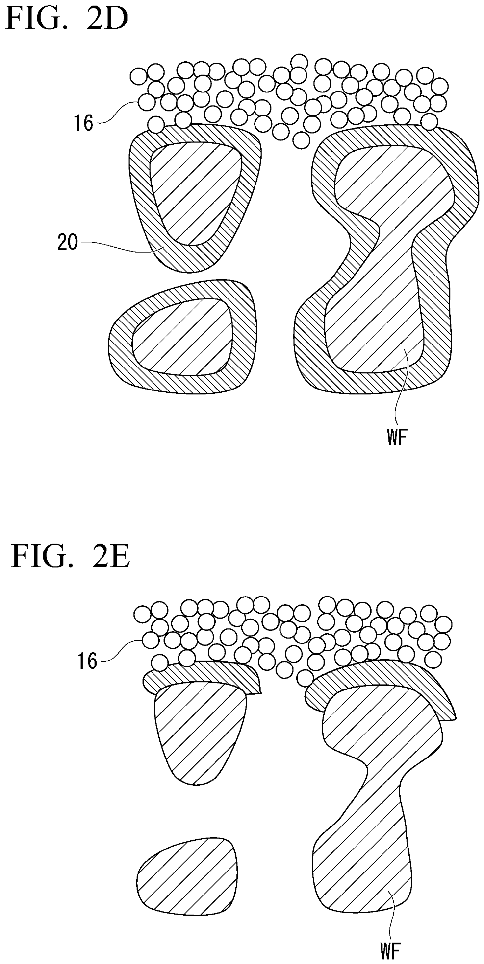

FIGS. 2D and 2E show schematic cross-sectional views of the fine particle filter according to another embodiment. The fine particle filter 10 according to FIGS. 2D and 2E has an exhaust gas purification catalyst 20 between the WF and the ceramic layer 16. When the fine particle filter 10 has the exhaust gas purification catalyst 20, the fine particle filter 10 can purify exhaust gas as well as collect PM. Therefore, it is preferable that the fine particle filter 10 has an exhaust gas purification catalyst 20.

In further detail, FIG. 2D is a schematic cross-sectional view of the fine particle filter having an in-wall coating of the exhaust gas purification catalyst 20, and FIG. 2E is a schematic cross-sectional view of the fine particle filter having an on-wall coating of the exhaust gas purification catalyst 20. In the in-wall coating, the WF is coated with the exhaust gas purification catalyst 20 up to the inside of the WF. On the other hand, in the on-wall coating, the exhaust gas flow channel side of the WF is selectively coated with the exhaust gas purification catalyst 20. The exhaust gas purification catalyst 20 may be applied as an in-wall coating as shown in FIG. 2D or may be applied as an on-wall coating as shown in FIG. 2E.

The exhaust gas purification catalyst 20 according to the present disclosure may be a catalyst which can purify hydrocarbons (HC), carbon monoxide (CO), or nitrogen oxides (NOx) contained in exhaust gas. The exhaust gas purification catalyst 20 preferably contains a precious metal and a porous inorganic oxide or an oxygen storage material, more preferably contains a precious metal, a porous inorganic oxide, and an oxygen storage material, and even more preferably contains at least one type selected from the group consisting of magnesium and alkaline earth metals, a precious metal, a porous inorganic oxide, and an oxygen storage material. Hereinafter, the mass of the exhaust gas purification catalyst 20 is sometimes represented by an indication based on the volume of the WF. That is, the mass of each component per liter of the WF is sometimes given in "g/L".

### (Precious Metal)

The precious metal may be a precious metal normally used for purifying exhaust gas, and is preferably platinum (Pt), palladium (Pd), or rhodium (Rh). The precious metal may be used alone or can also be used in combination. The precious metal can be changed as appropriate and used depending on the subject to be purified. For example, platinum or palladium and rhodium can be used when treating HC, CO, and NOx, and palladium and rhodium are particularly effective. In addition, platinum and/or palladium can be used for the treatment of HC or CO.

The applied amount of the precious metal can be changed as appropriate depending on the exhaust gas flow rate (SV (h⁻¹)) per unit volume of the catalyst and the concentration of HC or the like in exhaust gas.

The applied amount of precious metal may be 0.1 g or more and 10 g or less in terms of metal per liter of the WF. The applied amount differs depending on the precious metal to be used, and for example, when platinum, palladium, or rhodium is used, the applied amount is as follows.

When palladium is used, the applied amount of palladium per liter of the WF may be 0.1 g or more and 10 g or less, and preferably 0.2 g or more and 5 g or less. When the applied amount of palladium is 0.1 g/L or more and 10 g/L or less, hydrocarbons (HC) can be sufficiently oxidized, which is preferable.

When rhodium is used, the applied amount of rhodium per liter of the WF may be 0.05 g or more and 3 g or less, and preferably 0.2 g or more and 1 g or less. When the applied amount of rhodium is 0.1 g/L or more and 3 g/L or less, NOx can be efficiently reduced, which is preferable.

When platinum is used, the applied amount of platinum per liter of the WF may be 0.1 g or more and 3 g or less, and preferably 0.2 g or more and 1 g or less. When the applied amount of platinum is 0.1 g/L or more and 3 g/L or less, hydrocarbons or the like can be efficiently oxidized, which is preferable.

### (Porous Inorganic Oxide)

The porous inorganic oxide may be a porous inorganic oxide normally used for purifying exhaust gas, and is preferably alumina (Al₂O₃) such as α, γ, δ, or θ, zirconia (ZrO₂), titania (TiO₂), a mixture thereof, or a composite oxide thereof. When considering the effective utilization and durability of the exhaust gas purification catalyst, the porous inorganic material is preferably an oxide which is porous and has a large specific surface area not only when the exhaust gas is at a low temperature, but also when the exhaust gas is at a high temperature. The preferred average particle diameter (d50) of the porous inorganic oxide differs depending on the method of application to the WF. When the exhaust gas purification catalyst 20 is formed by an in-wall coating method, it is preferably more than 0 um and less than 1.5 um. When the average particle diameter is within such a range, the catalyst slurry containing the porous inorganic oxide can be applied to the inside of the partition walls of the WF. Further, when the exhaust gas purification catalyst 20 is formed by an on-wall coating method, the average particle diameter (d50) of the porous inorganic oxide may be 5 um or more and less than 15 um, and is preferably 8 um or more and 12 um or less. This average particle size range is desirable because it makes it difficult for the catalyst slurry containing the porous inorganic oxide to enter the partition wall of the WF. That is, by controlling the average particle diameter of the porous inorganic oxide, it is possible to apply the catalyst component containing the porous inorganic oxide at an intended application position for each method. Here, the average particle diameter (d50) of the porous inorganic oxide means a volume-based 50% particle diameter (median diameter) measured by laser diffractometry.

The specific surface area of the porous inorganic oxide when measuring the BET specific surface area using nitrogen gas may be 50 m²/g or more and 500 m²/g or less, and is preferably 70 m²/g or more and 400 m²/g or less. When the specific surface area is 50 m²/g or more, the precious metal or the oxygen storage material can be efficiently dispersed, which is preferable, and when the specific surface area is 500 m²/g or less, the heat resistance of the porous inorganic oxide is high, which is preferable.

The applied amount of the porous inorganic oxide may be an amount normally used in an exhaust gas purification catalyst, and is, for example, 1 g/L or more and 100 g/L or less, preferably 5 g/L or more and 50 g/L or less, and more preferably 10 g/L or more and 30 g/L or less. When the applied amount is 1 g/L or more, the precious metal or the oxygen storage material can be sufficiently dispersed, so that exhaust gas can be efficiently purified, which is preferable. When the applied amount is 100 g/L or less, the back pressure does not increase and the load on the engine is small, which is preferable.

### (Oxygen Storage Material)

The oxygen storage material has a function enabling absorption and adsorption of oxygen in exhaust gas and releasing it. The oxygen storage material may be an oxygen storage material normally used for purifying exhaust gas. Specifically, a rare earth oxide is preferable, and cerium oxide (CeO₂) is more preferable. For the purpose of improving the heat resistance, improving the specific surface area, or the like, a composite oxide may be formed from zirconium oxide (ZrO₂), lanthanum oxide (La₂O₃), yttrium oxide (Y₂O₃), neodymium oxide (Nd₂O₃), or praseodymium oxide (Pr₆O₁₁) and the oxygen storage material, and the composite oxide may be used as the oxygen storage material.

The applied amount of the oxygen storage material may be an amount normally used in an exhaust gas purification catalyst, and is, for example, 1 g/L or more and 50 g/L or less, preferably 5 g/L or more and 50 g/L or less, and more preferably 10 g/L or more and 40 g/L or less. When the applied amount is 1 g/L or more, oxygen in the exhaust gas can be sufficiently absorbed and discharged, and the catalyst performance can be enhanced, which is preferable. When the applied amount is 50 g/L or less, the back pressure does not increase and the load on the engine is small, which is preferable.

### (Other Components)

The exhaust gas purification catalyst may contain other components depending on the subject to be purified.

### [Method for Removing PM from Exhaust Gas of Internal Combustion Engine]

The method for removing PM from exhaust gas of an internal combustion engine according to the present disclosure includes a step of allowing the exhaust gas of the internal combustion engine to pass through the fine particle filter according to the present disclosure.

The space velocity SV of the exhaust gas is preferably 50, 000 h⁻¹ or more and 250, 000 h⁻¹ or less, and more preferably 100,000 h⁻¹ or more and 200,000 h⁻¹ or less. By adopting such a space velocity, PM in the exhaust gas can be sufficiently collected.

The exhaust gas temperature is not particularly limited, but is preferably 200°C or higher. Further, the exhaust gas temperature is preferably 600°C or lower, and more preferably 400°C or lower. By adopting such an exhaust gas temperature, when the fine particle filter has an exhaust gas purification catalyst, a catalytic reaction can sufficiently occur, and deterioration of the catalyst can also be suppressed.

In the method for removing PM from the exhaust gas of an internal combustion engine, the fine particle filter according to the present disclosure may be used alone, or an additional filter containing an exhaust gas purification catalyst may be used. The additional filter containing an exhaust gas purification catalyst may be placed between the internal combustion engine and the fine particle filter according to the present disclosure, or may be placed after the fine particle filter according to the present disclosure. As the additional filter containing an exhaust gas purification catalyst, for example, a filter with a known three-way catalyst applied thereon can be used. By using the additional filter containing an exhaust gas purification catalyst in addition to the fine particle filter according to the present disclosure, the exhaust gas can be purified more effectively.

### [Method for Producing Fine Particle Filter]

The method for producing a fine particle filter according to the present disclosure includes (1) an aerosol preparation step, (2) a ceramic particle introduction step, (3) a humidification step, and (4) a drying step. By producing a fine particle filter using such a method, a fine particle filter can be produced in which a ceramic layer has a desired porosity.

### (Aerosol Preparation Step)

In the step of preparing the aerosol, the density of the aerosol is preferably 0.001 g/m³ or more and 1 g/m³ or less, and more preferably 0.01 g/m³ or more and 0.1 g/m³ or less. By adopting such an aerosol density, it becomes easy to adjust the porosity of the ceramic layer in a desired range. Further, by adopting such an aerosol density, the ceramic layer made of ceramic particles can be uniformly deposited.

### (Ceramic Particle Introduction Step)

The step of allowing the aerosol to pass through the inside of the flow channels of the WF can be performed by sucking the aerosol from the side opposite to the aerosol inlet side of the WF. When the aerosol passes through the inside of the flow channels of the WF, the ceramic particles contained in the aerosol are deposited on the porous walls of the WF. The flow velocity of the aerosol may be, for example, 1 m/sec or more and 100 m/sec or less, preferably 5 m/sec or more and 30 m/sec or less, and more preferably 10 m/sec or more and 20 m/sec or less. By adopting such a flow velocity, the ceramic particles can be appropriately deposited.

### (Humidification Step)

The amount of water supplied to the ceramic particles and the WF is preferably 30 g/L or more and 300 g/L or less, more preferably 40 g/L or more and 200 g/L or less, and even more preferably 50 g/L or more and 100 g/L or less with respect to the volume of the WF. By supplying a specified amount of water to the ceramic particles and the WF and then performing the drying step, the porosity of the ceramic layer can be adjusted within a desired range. That is, by supplying water in an amount of 30 g/L or more and then performing the drying step, porosity can be decreased compared to that before supplying water, and by supplying water in an amount of 300 g/L or less, the porosity can be prevented from becoming excessively low.

The humidification step preferably includes a step of allowing a gas containing moisture to pass through the WF. When humidification is performed by gas, the entire filter can be uniformly humidified, so that the porosity of the ceramic layer can be uniformly adjusted. For example, water may be supplied by allowing a gas containing moisture in an amount equal to or greater than that of water saturated vapor to pass through the WF.

The temperature of the moisture containing gas when it is introduced into the filter may be, for example, 0°C or higher and 100°C or lower, preferably 5°C or higher and 70°C, and more preferably 10°C or higher and 50°C or lower. Since the gas at such a temperature can contain a large amount of moisture, water can be efficiently supplied to the ceramic particles and the WF.

The method for producing a fine particle filter according to the present disclosure preferably includes a step of washcoating an exhaust gas purification catalyst into the flow channels of the WF prior to the step of allowing the aerosol to pass through the inside of the flow channels of the WF. By including the step of washcoating an exhaust gas purification catalyst, the produced fine particle filter can also purify exhaust gas. The step of washcoating an exhaust gas purification catalyst can be performed by a known method. For example, the step of washcoating an exhaust gas purification catalyst includes a step of wet grinding an exhaust gas purification catalyst. For example, the wet grinding is performed in a ball mill. The solvent used during washcoating is not particularly limited, and for example, water or any organic solvent can be used. It is preferable to use water as the solvent for washcoating.

### Examples

Hereinafter, the invention will be specifically described while showing Examples and Comparative Examples, but the invention is not limited to these Examples as long as the effect of the invention is achieved.

### <Production of Fine Particle Filter>

### [Example 1]

An alumina powder having an average particle diameter (d50) of 3 um and air were mixed, thereby preparing an aerosol having a density of 0.020 g/m³. Subsequently, the prepared aerosol was allowed to pass through a cylindrical cordierite carrier, thereby depositing a ceramic layer in an amount of 25.9 g/L with respect to the volume of the cordierite carrier. The dimensions of the cylindrical cordierite carrier were 118.4 mm in diameter, 127 mm in length, 1.4 L in volume, 300 cells/square inch in cell density, 10 mils in wall thickness, and 15 um in pore diameter.

Subsequently, air humidified using a commercially available humidifier was allowed to pass through the above-mentioned cordierite carrier. In order to control the flow of the air, the air was sucked at 25°C at a rate of 12.5 m/s from the side opposite to the humidified air inlet side of the cordierite carrier. The amount of moisture supplied by the humidifier was 280 mL/h.

While circulating the humidified air, the change in the weight of the cordierite carrier was measured, and when the humidification amount reached 72.3 g/L with respect to the volume of the cordierite carrier, the circulation of the humidified air was stopped. Thereafter, the cordierite carrier was dried at 550°C in an air atmosphere, thereby obtaining a fine particle filter A.

### [Example 2]

A fine particle filter B was produced in the same manner as in Example 1 except that the applied amount of the ceramic layer was set to 26.0 g/L and the humidification amount was set to 185.3 g/L.

### [Example 3]

A fine particle filter C was produced in the same manner as in Example 1 except that the applied amount of the ceramic layer was set to 25.5 g/L and the humidification amount was set to 213.4 g/L.

### [Example 4]

A fine particle filter E was produced in the same manner as in Example 1 except that the applied amount of the ceramic layer was set to 25.7 g/L, the humidification amount was set to 168.6 g/L, and the suction rate of the humidified air was set to 5.0 m/s.

### [Example 5]

A fine particle filter F was produced in the same manner as in Example 1 except that the applied amount of the ceramic layer was set to 26.4 g/L, the humidification amount was set to 173.4 g/L, and the drying temperature was set to 150°C.

### [Example 6]

A fine particle filter G was produced in the same manner as in Example 1 except that the applied amount of the ceramic layer was set to 25.2 g/L, the humidification amount was set to 147.5 g/L, and the drying temperature was set to 350°C.

### [Example 7]

A fine particle filter I was produced in the same manner as in Example 1 except that an exhaust gas purification catalyst was applied, the applied amount of the ceramic layer was set to 24.8 g/L, the humidification amount was set to 190.2 g/L, and the drying temperature was set to 350°C.

The exhaust gas purification catalyst was applied as follows. First, the following respective raw materials: palladium nitrate as a palladium raw material, lanthanum-containing alumina containing 4 mass% of lanthanum as La₂O₃, a Ce-Zr-La-Y composite oxide (CeO₂ : ZrO₂ : La₂O₃ : Y₂O₃ was 24:60:3.5:12.5 in mass ratio), a Ce-Zr-La-Pr composite oxide (CeO₂ : ZrO₂ : La₂O₃ : Pr₆O₁₁ was 40:50:5:5 in mass ratio), barium hydroxide 8-hydrate as a BaO raw material, lanthanum acetate as a La₂O₃ raw material, and BaSO₄ were weighed so that the mass ratio of Pd : lanthanum-containing alumina : Ce-Zr-La-Y composite oxide: Ce-Zr-La-Pr composite oxide : BaO : La₂O₃ : BaSO₄ was 0.52:16.32:19.08:19.08:0.24:0.48:4.44.

Water was added to the mixture the raw materials so that the solid content was 38%, followed by stirring for 1 hour. The obtained mixed solution was subjected to wet grinding with a ball mill, thereby obtaining a slurry. The median diameter of the slurry measured by laser diffractometry was 1.45 um. By using this slurry, washcoating was performed from the exhaust gas inlet side of the cylindrical cordierite carrier. Subsequently, drying in air at 150°C for 15 minutes and calcining in air at 550°C for 30 minutes were performed, whereby the exhaust gas purification catalyst was applied on the cordierite carrier. In this Example, the exhaust gas purification catalyst was applied to the cordierite carrier as an in-wall coating. The weight of the cordierite carrier with the exhaust gas purification catalyst applied thereon was measured, and it was confirmed that about 60 g of the exhaust gas purification catalyst was applied per liter of the cordierite carrier.

After applying the exhaust gas purification catalyst on the cordierite carrier, a ceramic layer was prepared.

When the exhaust gas purification catalyst was analyzed by inductively coupled plasma (ICP) optical emission spectrometry, the composition of the exhaust gas purification catalyst after calcination was as shown in Table 1. Here, the composition is represented by a mass (g) with respect to the volume (L) of the cordierite carrier.

**[Table 1]**

| Composition (g/L) | Pd | Al₂O₃ | CeO₂ | ZrO₂ | La₂O₃ | Y₂O₃ | Pr₆O₁₁ | BaO | BaSO₄ | Total |
|---|---|---|---|---|---|---|---|---|---|---|
| Exhaust gas purification catalyst | 0.52 | 15.67 | 12.21 | 20.99 | 2.75 | 2.39 | 0.95 | 0.24 | 4.44 | 60.16 |

### [Comparative Example 1]

As Comparative Example 1, a single cordierite carrier containing neither ceramic layer nor exhaust gas purification catalyst was used as a fine particle filter D. In Comparative Example 1, the humidification step was not performed.

### [Comparative Example 2]

A fine particle filter H was produced in the same manner as in Example 7 except that the applied amount of the ceramic layer was set to 25.0 g/L and the humidification step was not performed.

### [Comparative Example 3]

A fine particle filter J was produced in the same manner as in Example 7 except that the ceramic layer was not prepared after applying the exhaust gas purification catalyst in Example 7. In Comparative Example 3, the ceramic layer was not prepared. In addition, the humidification step was not performed.

### <Analysis of Porosity>

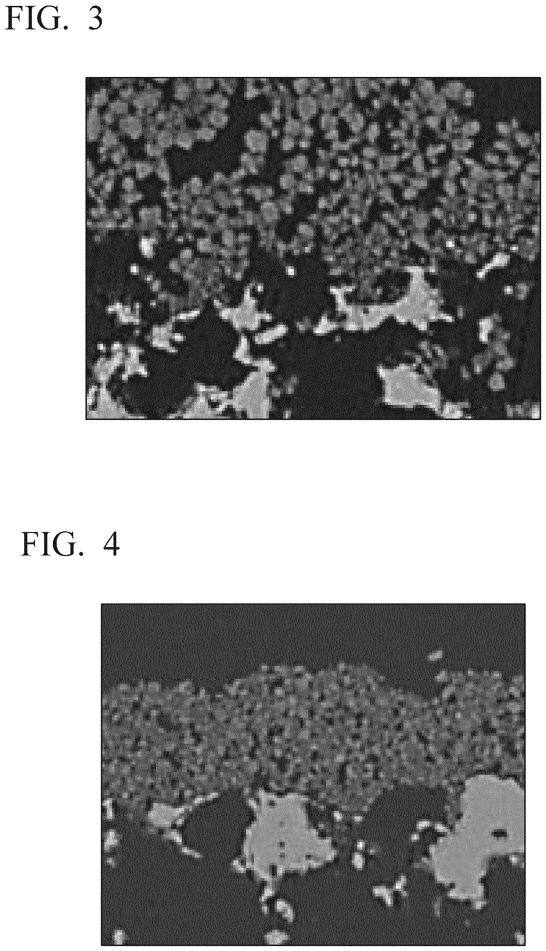

The cross sections of the fine particle filters obtained in Examples and Comparative Examples were visually analyzed with a scanning electron microscope (SEM), and the porosity was measured. FIG. 3 is a cross-sectional SEM image of the fine particle filter of Example 1. FIG. 3 is a cross-sectional SEM image of the interface between the ceramic layer and the cordierite carrier. Further, FIG. 4 is a cross-sectional SEM image of the fine particle filter of Example 3. FIG. 4 is a cross-sectional SEM image of the interface between the ceramic layer and the cordierite carrier. A binarization process was performed on an enlarged view of a portion of the ceramic layer, and the porosity was calculated. The porosity was calculated in the same manner for five random points, and the average value thereof was used as the porosity of the ceramic layer in each Example and Comparative Example.

The production conditions and the porosities of Examples and Comparative Examples are summarized as shown in the following Table 2.

**[Table 2]**

| | Exhaust gas purification catalyst | Applied amount of ceramic layer (g/L) | Humidification amount (g/L) | Air suction rate (m/s) | Drying temperature after humidification (C°) | Porosity (%) |
|---|---|---|---|---|---|---|
| Fine particle filter A | without | 25.9 | 72.3 | 12.5 | 550 | 34.2 |
| Fine particle filter B | without | 26.0 | 185.3 | 12.5 | 550 | 31.8 |
| Fine particle filter C | without | 25.5 | 213.4 | 12.5 | 550 | 22.0 |
| Fine particle filter E | without | 25.7 | 168.6 | 5.0 | 550 | 29.5 |
| Fine particle filter F | without | 26.4 | 173.4 | 12.5 | 150 | 30.0 |
| Fine particle filter G | without | 25.2 | 147.5 | 12.5 | 350 | 33.0 |
| Fine particle filter I | with | 24.8 | 190.2 | 12.5 | 350 | 38.4 |
| Fine particle filter D | without | - | - | - | - | - |
| Fine particle filter H | with | 25.0 | - | - | - | 45.0 |
| Fine particle filter J | with | - | - | - | - | - |

With reference to FIGS. 3 and 4, it can be seen that the ceramic particles are deposited more densely in FIG. 4 than in FIG. 3. This corresponds to the fact that the porosity of Example 3 is lower than the porosity of Example 1.

### (Evaluation of Fine Particle Filter)

With respect to the produced fine particle filters, the filtration efficiency of the fine particle filter was measured according to the "Worldwide Harmonized Light Vehicles Test Procedure" (WLTP). The measurement results of the filtration efficiency are shown in the following Table 3.

**[Table 3]**

| | Filtration efficiency (%) |
|---|---|
| Fine particle filter A | 97 |
| Fine particle filter B | 95 |
| Fine particle filter C | 91 |
| Fine particle filter E | 94 |
| Fine particle filter F | 94 |
| Fine particle filter G | 96 |
| Fine particle filter I | 93 |
| Fine particle filter D | 85 |
| Fine particle filter H | 88 |
| Fine particle filter J | 75 |

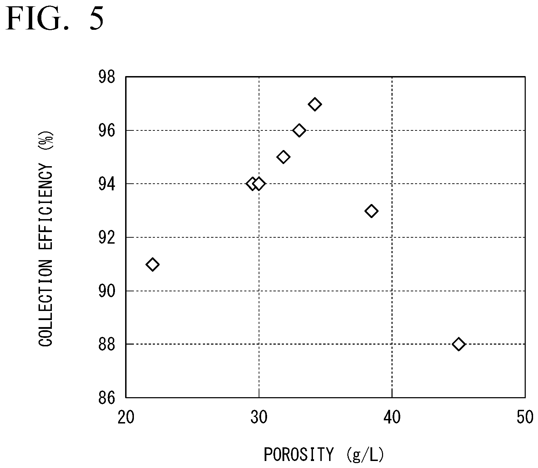

With respect to the PM filtration efficiency, the filtration efficiency of the fine particle filter of Comparative Example 1 having no ceramic layer was the lowest value. When the filtration efficiency of the fine particle filters of Examples 1 to 7 and Comparative Example 2 having the ceramic layer is plotted against the porosity, FIG. 5 is obtained. The porosity of the ceramic layer according to Examples is lower than that of Comparative Example 2 in which the step of supplying water and drying was not performed. Further, the fine particle filters according to Examples in which the porosity of the ceramic layer is lower have a higher filtration efficiency than those of Comparative Examples. That is, it can be seen that the fine particle filter according to the present disclosure in which the ceramic layer has a specified porosity shows an improved PM filtration efficiency.

### <Exhaust Gas Purification Performance>

A thermal aging test was performed on the fine particle filters produced in Example 7, Comparative Example 1, Comparative Example 2, and Comparative Example 3, and simulated exhaust gas purification performance was evaluated for the fine particle filters after the thermal aging. The thermal aging test was performed by circulating air at 700°C containing 10 vol% of water through the fine particle filter for 40 hours. In the evaluation of the purification performance, as the simulated exhaust gas, a mixed gas containing C₃H₆ at 1200 ppm (methane equivalent), NO at 500 ppm, H₂ at 0.17%, CO at 5%, O₂ at 0.5%, CO₂ at 14%, H₂O at 10%, and N₂ as a balance gas was prepared and allowed to flow through each fine particle filter at a space velocity of 250,000 h⁻¹, and the conversion ratios of HC, CO, and NOx at 400°C were measured. The evaluation results are shown in the following Table 4.

**[Table 4]**

| | HC (%) | CO (%) | NOx (%) |
|---|---|---|---|
| Fine particle filter I | 79 | 78 | 62 |
| Fine particle filter D | 0 | 0 | 0 |
| Fine particle filter H | 78 | 77 | 61 |
| Fine particle filter J | 72 | 68 | 54 |

From Table 4, it can be seen that the fine particle filter I according to Example 7, having undergone the humidification step and the drying step, exhibits excellent exhaust gas purification performance.

### Industrial Applicability

The fine particle filter according to the present disclosure has an improved PM filtration efficiency.

The fine particle filter produced by a method according to the present disclosure can remove PM from exhaust gas with high efficiency.

The method for producing a fine particle filter according to the present disclosure can provide a fine particle filter having an improved PM filtration efficiency.

### Reference Signs List

10: fine particle filter
12: opening portion
14: sealing portion
16: ceramic layer
20: exhaust gas purification catalyst
WF: wall-flow type filter
PM: particulate matter

## Claims

1. A fine particle filter for removing a particulate matter from exhaust gas of an internal combustion engine, comprising a wall-flow type filter that has a porous wall, and a ceramic layer that is made of ceramic particles and that is applied in a flow channel of the wall-flow type filter, wherein
the ceramic layer has a porosity of 20% or more and 41% or less.

2. The fine particle filter according to claim 1, wherein the ceramic particles are made of one selected from the group consisting of alumina, silica, zirconia, ceria, titania, and zeolite.

3. The fine particle filter according to claim 1 or 2, wherein the ceramic particles have an average particle diameter (d50) of 1.5 um or more and less than 5 um.

4. The fine particle filter according to any one of claims 1 to 3, wherein the ceramic layer is applied in an amount of 10 g/L or more and 50 g/L or less with respect to the volume of the wall-flow type filter.

5. The fine particle filter according to any one of claims 1 to 4, which has an exhaust gas purification catalyst between the wall-flow type filter and the ceramic layer.

6. A method for removing a particulate matter from exhaust gas of an internal combustion engine, comprising a step of allowing the exhaust gas of the internal combustion engine to pass through the fine particle filter according to any one of claims 1 to 5.

7. A method for producing a fine particle filter, comprising:
a step of preparing an aerosol by mixing ceramic particles and air;
a step of allowing the aerosol to pass through the inside of a flow channel of a wall-flow type filter having a porous wall;
a step of supplying water in an amount of 30 g/L or more and 300 g/L or less with respect to the volume of the wall-flow type filter to the ceramic particles and the wall-flow type filter; and
a step of drying the wall-flow type filter.

8. The method for producing a fine particle filter according to claim 7, wherein the aerosol has a density of 0.001 g/m³ or more and 1 g/m³ or less.

9. The method for producing a fine particle filter according to claim 7 or 8, wherein the step of supplying water includes a step of allowing a gas containing moisture to pass through the wall-flow type filter.

10. The method for producing a fine particle filter according to any one of claims 7 to 9, including a step of washcoating an exhaust gas purification catalyst into the flow channel of the wall-flow type filter before the step of allowing the aerosol to pass through the inside of the flow channel of the wall-flow type filter.
